# EUROPEAN PATENT SPECIFICATION

(11) **EP 3 553 570 B1**
(45) Date of publication and mention of the grant of the patent: **06.10.2021**
(21) Application number: 19168495.0
(22) Date of filing: 10.04.2019
(51) Int. Cl.: G01V 8/00

(54) **MILLIMETER WAVE SCANNING IMAGING SYSTEM FOR SCENE MONITORING AND SECURITY INSPECTION METHOD**
MILLIMETERWELLENABTASTENDES BILDGEBUNGSSYSTEM ZUR FREI- UND GROSSRAUMÜBERWACHUNG MIT SICHERHEITSINSPEKTIONSVERFAHREN
SYSTÈME D'IMAGERIE PAR BALAYAGE D'ONDES MILLIMÉTRIQUES POUR LA SURVEILLANCE D'UN LIEU ET PROCÉDÉ D'INSPECTION DE SÉCURITÉ

(30) Priority: 11.04.2018 CN 201810323716
(43) Date of publication of application: 16.10.2019
(73) Proprietor: Tsinghua University, Beijing 100084 (CN); Nuctech Company Limited, Beijing 100084 (CN)
(72) Inventor: ZHAO, Ziran, Haidian District, Beijing 100084 (CN); CHEN, Zhiqiang, Haidian District, Beijing 100084 (CN); LI, Yuanjing, Haidian District, Beijing 100084 (CN); JIN, Yingkang, Haidian District, Beijing 100084 (CN); QIAO, Lingbo, Haidian District, Beijing 100084 (CN); ZHENG, Zhimin, Haidian District, Beijing 100084 (CN); LUO, Xilei, Haidian District, Beijing 100084 (CN); LIU, Wenguo, Haidian District, Beijing 100084 (CN); WU, Wanlong, Haidian District, Beijing 100084 (CN)
(74) Representative: Carpmaels & Ransford LLP

(56) References cited:
- EP-A1- 3 287 816
- WO-A1-2018/032669
- CN-A- 105 510 911
- US-A1- 2011 163 231
- US-A1- 2017 254 750

## Description

### TECHNICAL FIELD

Embodiments of the present disclosure generally relate to the field of security inspection, and particularly, to a scene monitoring type millimeter wave scanning imaging system and a security inspection method by using the same.

### DESCRIPTION OF THE RELATED ART

In order to ensure public safety, security inspection is necessary in important public places. The most widely used imaging security technology is an X-ray imaging technology and a millimeter wave imaging technology. Millimeter wave detection imaging technology has advantages such as non-ionizing radiation, abilities of penetrating clothing over a human body and identifying various metal and non-metallic contrabands, and the like. With the development of millimeter wave technology and the reduction of device cost in the past decade, it is gradually attracting attention in human security inspection. Millimeter wave detection imaging technology is mainly divided into a passive millimeter wave imaging technology and an active millimeter wave imaging technology, while the active millimeter wave imaging technology is mainly based on holographic imaging technology. Compared with the passive imaging technology, an active millimeter wave image is clear, has a high resolution, and can meet requirement of human security inspection.

US2017254750A1 discloses a scene monitoring type millimeter wave scanning imaging system comprising millimeter wave scanning imaging devices oriented towards different orientations respectively so as to scan and image objects to be inspected located within different inspection areas of the security inspection scene with millimeter waves and to provide scan data for the objects, wherein each of the millimeter wave scanning imaging devices is oriented towards a respective orientation different from the orientations towards which any others of the millimeter wave scanning imaging devices are oriented and is configured to scan and image an object located within a respective inspection area different from the inspection areas of any others of the millimeter wave scanning imaging devices.

WO2018032669A1 relates to a millimeter wave imaging-based omni-directional security detection system, the system comprising a support frame with a plurality of surfaces, millimeter-wave array antennas disposed on different surfaces of the support frame for transmitting millimeter-wave transmission signals from different angles to a to-be-detected object to provide a three-dimensional image of the object. EP3287816A1 relate to a millimeter wave imaging system that include first and second millimeter wave transceiving antenna array respectively provided at two opposite sides of an inspection channel.

The existing active millimeter wave security imaging system mainly includes a cylindrical scanning system, a plane scanning system and an area array scanning system. Due to the limitation of imaging time, an inspected person needs to stand in front of the human security inspection system for a certain period of time to complete the inspection, thus greatly limiting the throughout rate of the security inspection. In the actual security inspection, the existing equipment can only support inspection of one target. If it is desired to inspect a plurality of human bodies at the same time, many equipments are needed, and thus the cost and occupying space will be greatly increased.

### SUMMARY

The present disclosure is made to at least partly solve or alleviate at least one aspect of the above mentioned and other disadvantages or problems in prior arts.

According to an aspect of the present disclosure, there is provided a scene monitoring type millimeter wave scanning imaging system as defined in claim 1.

In some embodiments, a cross section of the columnar arrangement has a closed polygonal shape having sides each defined by a corresponding one of the plurality of millimeter wave scanning imaging devices.

In some embodiments, the closed polygonal shape includes a triangular shape, a quadrilateral shape, a pentagonal shape or a hexagonal shape.

In some embodiments, two adjacent ones of the side faces of the columnar arrangement form an angle greater than zero degree and less than 180 degrees.

In some embodiments, the scene monitoring type millimeter wave scanning imaging system further includes an optical camera configured to capture an optical image of an object to be inspected entering the security inspection scene, for determining whether or not the object to be inspected reaches one of the inspection areas towards which a corresponding one of the plurality of millimeter wave scanning imaging devices faces before the corresponding one of the millimeter wave scanning imaging devices is started-up for scanning imaging.

In some embodiments, the scene monitoring type millimeter wave scanning imaging system is provided with or includes a plurality of said optical cameras, each of which is associated with a corresponding one of the plurality of millimeter wave scanning imaging devices so as to capture the optical image of the object to be inspected entering one of the inspection areas towards which the associated one of the millimeter wave scanning imaging devices faces.

In some embodiments, each of the plurality of millimeter wave scanning imaging devices includes a millimeter wave transceiver antenna array, the millimeter wave transceiver antenna array including a mesh-shaped transceiver antenna array consisting of a plurality of sub-array units, each of the plurality of sub-array units includes a transmitting antenna linear array and a receiving antenna linear array, the transmitting antenna linear array includes a plurality of millimeter wave transmitting antennas arranged linearly, and the receiving antenna linear array includes a plurality of millimeter wave receiving antennas arranged linearly.

In some embodiments, each of the plurality of sub-array units has a rectangular shape and includes two said transmitting antenna linear arrays arranged respectively along a pair of sides of the rectangular shape facing each other and two said receiving antenna linear arrays arranged respectively along another pair of sides of the rectangular shape facing each other; and two adjacent ones of the plurality of sub-array units share one said transmitting antenna linear array or one said receiving antenna linear array.

In some embodiments, each of the plurality of sub-array units includes one said transmitting antenna linear array and one said receiving antenna linear array crossing each other to form a crisscross shape.

In some embodiments, at least one millimeter wave transceiver antenna array has a plane or arc profile.

In some embodiments, each of the plurality of millimeter wave scanning imaging devices further includes a first millimeter wave source, a second millimeter wave source, a mixer, a switch matrix, a transmitter module and a receiver module; the first millimeter wave source is configured as a transmitting source for generating a first millimeter wave signal; the second millimeter wave source is configured as a reference source for generating a second millimeter wave signal; the mixer is configured to mix in frequency the second millimeter wave signal generated by the second millimeter wave source with the first millimeter wave signal generated by the first millimeter wave source so as to form a frequency mixed signal as a reference signal; the switch matrix is connected between the first millimeter wave source and the transmitter module, and is configured to control switching of on-off states of the millimeter wave transmitting antennas and the millimeter wave receiving antennas such that in response to one millimeter wave transmitting antenna of the plurality millimeter wave transmitting antennas transmitting a millimeter wave signal to the objects to be inspected, only the millimeter wave receiving antennas which are arranged in a same one of the sub-array units as the one millimeter wave transmitting antenna receive reflected millimeter wave signals from the objects simultaneously; the transmitter module is configured to, under control of the switch matrix, drive the millimeter wave transmitting antennas to transmit millimeter waves based on the first millimeter wave signal generated by the first millimeter wave source; and the receiver module is configured to receive the reflected millimeter wave signals received by the millimeter wave receiving antennas from the objects, and to demodulate the received reflected millimeter wave signals based on the reference signal outputted from the mixer so as to obtain scan data for the objects.

In some embodiments, the scene monitoring type millimeter wave scanning imaging system further includes: a data processing device electrically connected in a wireless way or in a wired way with one or more of the plurality of millimeter wave scanning imaging devices so as to receive the scan data obtained by scanning the objects to be inspected with a millimeter wave by the one or more millimeter wave scanning imaging devices; and a display device connected with the data processing device so as to receive the scan data and to display a millimeter wave image corresponding to the scan data.

In another aspect, an embodiment of the present disclosure further provides a security inspection method according to claim 13.

In some embodiments, the scanning and imaging, by using the scene monitoring type millimeter wave scanning imaging system, objects to be inspected located within different inspection areas of a security inspection scene, with millimeter waves includes: determining whether an object to be inspected enters one of the inspection areas of the security inspection scene; and after determining an object to be inspected has entered one of the inspection areas of the security inspection scene, scanning and imaging the object with millimeter waves by using a corresponding one of the plurality of millimeter wave scanning imaging devices facing towards the one of the inspection areas.

Other objects and advantages of the present disclosure will become apparent from the following description of the present disclosure taken in conjunction with the accompanying drawings, and may give a comprehensive understanding of the present disclosure.

### BRIEF DESCRIPTION OF THE DRAWINGS

The above and other features and advantages of the present disclosure will become more apparent with reference to the accompanying drawings, which are schematic and should not be interpreted as being limitative to the present disclosure, and in which:
Figure 1 is a schematic diagram showing an arrangement of a scene monitoring type millimeter wave scanning imaging system according to an exemplary embodiment of the present disclosure;
Figure 2 is a block diagram showing an arrangement of a millimeter wave scanning imaging device according to an exemplary embodiment of the present disclosure;
Figure 3A is a schematic diagram showing an arrangement of antennas of a millimeter wave transceiver antenna array according to an exemplary embodiment of the present disclosure;
Figure 3B is a schematic diagram showing an arrangement of antennas of a millimeter wave transceiver antenna array according to another exemplary embodiment of the present disclosure;
Figure 4A is a top view showing examples of a cross section shape of a millimeter wave transceiver consisted of a plurality of millimeter wave transceiver antenna arrays according to some exemplary embodiments of the present disclosure; and
Figure 4B is a top view showing examples of a cross section shape of a millimeter wave transceiver consisted of a plurality of millimeter wave transceiver antenna arrays according to some other exemplary embodiments of the present disclosure.

### DETAILED DESCRIPTION OF EXEMPLARY EMBODIMENTS

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art. It should be noted and understood that there can be improvements and modifications made of the present invention described in detail above without departing from the scope of the invention as set forth in the accompanying claims.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

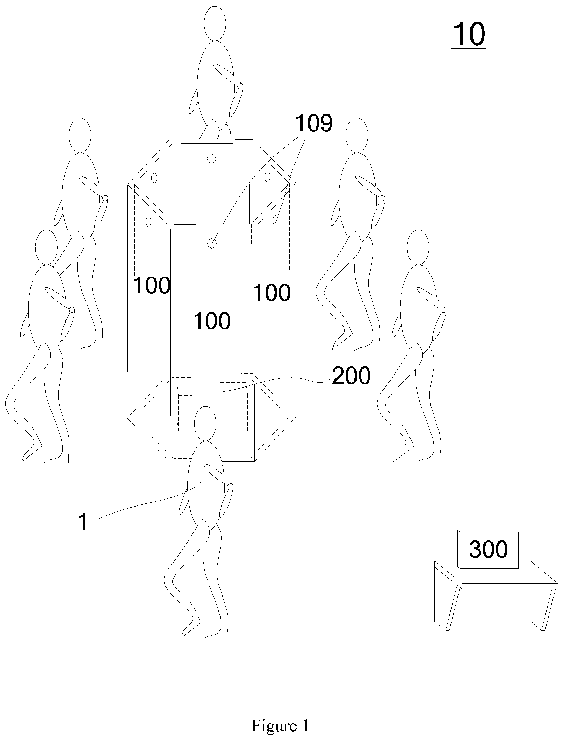

Figure 1 schematically shows an arrangement of a scene monitoring type millimeter wave scanning imaging system according to an exemplary embodiment of the present disclosure. Exemplarily, the millimeter wave scanning imaging system may be applied in active millimeter wave security inspection. As shown in the Figure, a scene monitoring type millimeter wave scanning imaging system 10 includes a plurality of millimeter wave scanning imaging devices 100, which are adapted to be positioned in a security inspection scene or in a public place, and arranged to be oriented towards different orientations respectively so as to perform millimeter wave scanning imaging operations on objects 1 to be inspected (for example, passers-by or persons to be inspected) located within different inspection areas or ranges of the security inspection scene or public place and to provide scan data with respect to the objects. Thereby, when the millimeter wave scanning imaging system is placed in a security inspection scene or public place such as an airport, a station, a shopping mall, etc., millimeter wave scanning imaging devices are oriented to different orientations respectively and perform millimeter wave scanning imaging operations on different objects to be inspected entering different inspection areas or ranges of the security inspection scene or public place simultaneously or directionally, for determining whether or not the objects to be inspected have or carry dangerous or prohibited items, thereby enabling full-orientation security monitoring of the entire security inspection scene or public place. It is helpful to improve the throughput rate of the security inspection system, especially in densely populated areas such as airports and stations. It can allow persons to stay for a shorter period of time when passing the security inspection system, and if necessary, suspicious persons may be intercepted and specifically inspected through a remote terminal located at the security exit.

As shown in Figure 1, the scene monitoring type millimeter wave scanning imaging system 10 may further include a data processing device 200 and a display device 300, the data processing device 200 is electrically connected in a in a wireless way or in a wired way with one or more plurality of millimeter wave scanning imaging devices 100 so as to receive the scan data obtained by scanning the objects 1 to be inspected with a millimeter wave by using the millimeter wave scanning imaging devices 100, and the display device 300 is electrically connected in a wireless way or in a wired way with the data processing device 200 so as to receive the scan data and to display a millimeter wave image corresponding to the scan data, for example, a holographic image of the inspected object.

The data processing device 200 can receive the data (for example, holographic data) obtained through scanning and perform image reconstruction. For example, the data processing device may include a personal computer (PC), a server, or a workstation, etc. According to some embodiments, the data processing device may include a processor and a memory. The processor may be electrically connected to the millimeter wave scanning imaging device to receive and process the scan data. The memory may be electrically connected to the processor and store instructions therein that, when being executed by the processor, cause the processor to perform the image reconstruction, or control the millimeter wave scanning imaging device to scan the object to be inspected. The display device can also display information about the millimeter wave scanning imaging system, for example status information, imaging results, alarm information and the like.

In the embodiment shown in Figure 1, a plurality of millimeter wave scanning imaging devices 100 are arranged (for example, spliced or otherwise connected) into a columnar arrangement having a plurality of side faces (for example, vertical side faces), each of which is defined by one corresponding millimeter wave scanning imaging device 100 so as to face a corresponding orientation in the security inspection scence, or in embodiments not forming part of the invention each of the plurality of side faces includes an outer contour or surface of the corresponding millimeter wave scanning imaging device 100 so as to face a corresponding orientation in the security inspection scene. The columnar arrangement can be placed in a security inspection scene or an open area such as a central area of a public place. When persons to be inspected pass by the columnar arrangement from different orientations, the persons can be scanned and imaged by the columnar arrangement, thereby eliminating the need to move the millimeter wave scanning imaging device or not requiring the persons to be inspected to enter a security inspection system set up at a specific security inspection location (e.g., an entrance to a security inspection scene or public place, a special security inspection room, etc.) for inspection.

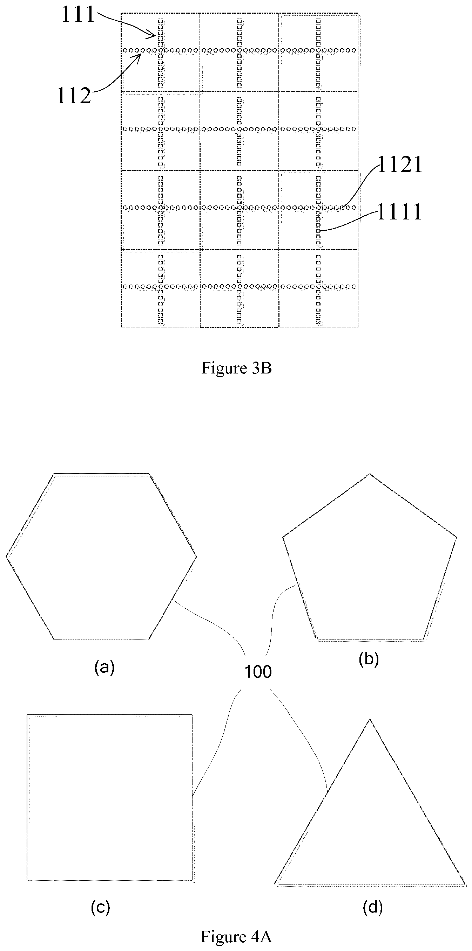

In some embodiments, as shown in Figure 1 and in parts (a) to (d) of Figure 4A, a cross section of the columnar arrangement consisting of or including a plurality of millimeter wave scanning imaging devices 100 has a closed polygonal shape, each of sides of the polygonal shape is defined by one millimeter wave scanning imaging device 100, for example, one millimeter wave scanning imaging device 100 is located at one side face of the columnar arrangement. For example, the closed polygonal shape may include a triangular shape, a quadrilateral shape, a pentagonal shape, a hexagonal shape or the like. The more the number of sides of the formed polygonal shape is, the more the number of scene monitoring orientations or directions is. The number of sides of the polygonal shape or the number of the millimeter wave scanning imaging devices may be determined according to factors such as sizes, locations of the security inspection areas of the security inspection scene or the public place, imaging resolution or the like.

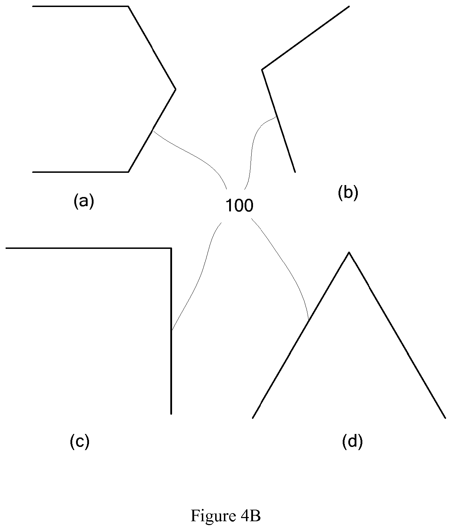

In other embodiments, as the top view shown in Figure 4B, the columnar arrangement formed by a plurality of millimeter wave scanning imaging devices 100 is partially open or is open at a side face, and is not formed into a closed arrangement, so that its cross section has a polygonal outline, which for example forms only a part of polygon. This unclosed columnar arrangement can be placed in a corner of the security inspection scene or public place or against a building wall so as to scan and image the objects to be inspected from different orientations. Exemplarily, there is an angle, which is greater than zero degree and less than 180 degrees, formed between adjacent sides of the columnar arrangement or adjacent sides of the cross section. This angle may be set according to factors such as sizes, locations of the security inspection areas of the security inspection scene or the public place or the like.

In an exemplary embodiment, as shown in Figure 1, the data processing device 200 is positioned in a closed or partially enclosed space surrounded by the plurality of millimeter wave scanning imaging devices 100. The display device 300 may be positioned at a location, for example, in a monitoring room, away from the millimeter wave scanning imaging devices, and in wired or wireless communication with the data processing device 200 to receive data from the data processing device.

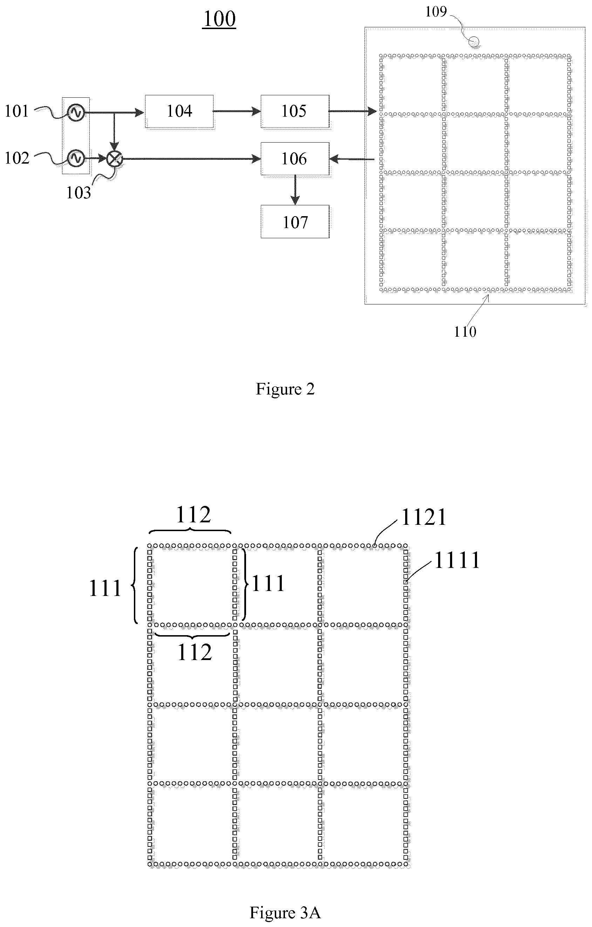

Figure 2 schematically shows an arrangement of a millimeter wave scanning imaging device according to an exemplary embodiment of the present disclosure. As shown in the Figure, a millimeter wave scanning imaging device 100 includes a first millimeter wave source 101, a second millimeter wave source 102, a mixer 103, a switch matrix 104, a transmitter module 105, a receiver module 106, and a millimeter wave transceiver antenna array 110 including a plurality of millimeter wave transmitting antennas and a plurality of millimeter wave receiving antennas.

Exemplarily, the first millimeter wave source 101 may be configured as a millimeter wave transmitting source for generating a first, transmitted millimeter wave signal; the second millimeter wave source may be configured as a reference source for generating a second, reference millimeter wave signal; for example, the first millimeter wave source 101 or the second millimeter wave source 102 may be an oscillator that produces a signal of a certain frequency. The mixer 103 is configured to mix in frequency the millimeter wave signals generated by the first millimeter wave source 101 and the second millimeter wave source 102 so as to form a frequency mixed signal as a reference signal.

The switch matrix 104 is connected between the first millimeter wave source 101 and the transmitter module 105, and is configured to control switching of transmitting/receiving antennas, for example, to control switching of on-off states of the millimeter wave transmitting antennas and the millimeter wave receiving antennas. Exemplarily, the switch matrix may control, through an electronic switch, the transmitting antennas to transmit millimeter wave signals in a certain order. According to an embodiment, the transmit antennas may be switched by the switch matrix to scan millimeter wave onto the objects to be inspected so that holographic data of the objects may be obtained. In an example, the switch matrix controls switching of on-off states of the millimeter wave transmitting antennas and the millimeter wave receiving antennas and control the transmitting antennas to transmit millimeter wave signals sequentially, such that when one millimeter wave transmitting antenna transmits a millimeter wave signal to the object to be inspected, only the millimeter wave receiving antennas which are associated with the one millimeter wave transmitting antenna (for example, which are arranged in a same one sub-array unit as the one millimeter wave transmitting antenna, as described below) receive reflected millimeter wave signals from the object simultaneously. In another example, the transmitting antennas may be controlled by the switch matrix to transmit millimeter wave signals sequentially, and all receiving antennas receive millimeter wave signals reflected from the objects simultaneously.

The transmitter module 105 is configured to, under control of the switch matrix, drive the millimeter wave transmitting antennas to transmit millimeter waves based on the first millimeter wave signal generated by the first millimeter wave source 101. For example, the transmitter module may multiply in frequency and amplify in power the first millimeter wave signal outputted from the first millimeter wave source so as to obtain a transmission signal the transmission signal is inputted to the transmitting antenna, so that the transmitting antenna transmits a millimeter wave. The transmitted millimeter wave may illuminate the object to be inspected and be reflected by the object. The millimeter wave reflected by the object is received by the receiving antenna, and the received millimeter wave signal can be inputted to the receiver module 106. The receiver module 406 can demodulate the received millimeter wave signal based on the reference signal outputted by the mixer, so as to obtain scan data, for example millimeter wave holographic data, of the object.

In another embodiment, the millimeter wave scanning imaging device 100 may further include a multi-channel analog-to-digital converter circuit 107 configured to convert the millimeter wave holographic data analog signal output from the receiver module 106 into a digital signal, which is outputted to and processed by the data processing device 200.

In other embodiments, one or more of the first millimeter wave source 101, the second millimeter wave source 102, the mixer 103, the switch matrix 104, the transmitter module 105, the receiver module 106 and the analog-to-digital converter circuit 107 described above may be integrated into one device, or may be implemented as various modules of the device.

In the embodiments shown in Figures 2 to 3B, the millimeter wave transceiver antenna array 110 includes a mesh-shaped or grid-like transceiver antenna array consisted of a plurality of sub-array units, each of which includes a transmitting antenna array 111 and a receiving antenna array 112. According to an embodiment of the present disclosure, the millimeter wave transceiver antenna array may have a plane, curved or arc profile. Exemplarily, for the convenience of data processing, respective sub-array units may have the same or similar configuration, for example the same or similar shape and/or size, the same or similar arrangement of transmitting antennas/receiving antennas.

For example, the transmitting antenna array 111 and/or the receiving antenna array 112 may include a linear antenna array. Each transmitting antenna linear array may have a plurality of millimeter wave transmitting antennas 1111 arranged linearly, and each receiving antenna linear array may have a plurality of millimeter wave receiving antennas 1121 arranged linearly.

As shown in Figures 2 and 3A, each sub-array unit has a rectangular shape such as a square, and includes two transmitting antenna linear arrays 111 arranged respectively along a pair of sides of the rectangular shape facing each other and two said receiving antenna linear arrays 112 arranged respectively along another pair of sides of the rectangular shape facing each other. Exemplarily, each square sub-array unit includes first and second transmitting antenna linear arrays and first and second receiving antenna linear arrays, the first transmitting antenna linear array is opposite to the second transmitting antenna linear array, the first receiving antenna linear array is opposite to the second receiving antenna linear array, and the first and second receiving antenna linear arrays and the first and second receiving antenna linear arrays together form the square sub-array unit as its four sides. Two adjacent sub-array units share one transmitting antenna linear array or one receiving antenna linear array.

In the embodiment shown in Figure 3B, each sub-array unit may be a mesh-shaped or grid-like transceiver array consisted of crossed sub-units, each crossed sub-unit includes a transmitting antenna linear array 111 and a receiving antenna linear array 112, which cross each other (such as are orthogonal to each other) to form a crisscross shape or a crisscross profile. It will be understood that the arrangement of the antennas in the millimeter wave transceiver antenna array is not limited to the embodiments shown in the Figures, and may be set according to actual requirements such that respective millimeter wave transceiver antenna array, which are oriented to different orientations in the security inspection scene or public place, can perform millimeter wave scanning imaging operations on objects to be inspected (e.g., pedestrians or persons to be inspected) within different inspection areas or ranges towards which they face.

In some embodiments of the present disclosure, as shown in Figures 1 and 2, there may be also provided an optical camera 109, which is configured to capture an optical image of an object 1 to be inspected entering the security inspection scene, for determining whether or not the object to be inspected reaches the inspection area towards which a corresponding millimeter wave scanning imaging device faces before the corresponding millimeter wave scanning imaging device is started-up for scanning imaging. For example, the scene monitoring type millimeter wave scanning imaging system 10 may be provided with or may include a plurality of optical cameras 109 each associated with a corresponding one of the millimeter wave scanning imaging devices 100 so as to capture the optical image of the object to be inspected entering the inspection area towards which the one millimeter wave scanning imaging device faces.

The optical camera may record an optical image of the object to be inspected, which, for example, may be used to determine whether the object to be inspected reaches the correct detection area before starting the scan, and the optical camera may capture an optical image of the object during the scanning process. Further, at the same time, the data processing device may acquire the optical image of the object captured by the optical camera, and determine identity of the object by a face recognition technology. The data processing device may match the optical image of the inspected object to the millimeter wave image, so as to provide comprehensive inspection information, may output identity information of the object and security alarm information to the display device, so that the display device may display the alarm information within a red box at a corresponding position on the optical image, and of course, may also display the optical image and the millimeter wave image with a warning box or a cartoon picture with a warning box.

An embodiment of the present disclosure also provides a security inspection method according to claim 13.

In one embodiment, for example, it may be determined through for example the optical camera whether an object to be inspected enters an inspection area of the security inspection scene, and after determining that an object to be inspected enters an inspection area of the security inspection scene, the millimeter wave scanning imaging device, which is oriented toward the inspection area, implements a millimeter wave scanning imaging operation on the object. In an example, after starting the millimeter wave scanning imaging operation, the transmitting antennas may be controlled to sequentially transmit a millimeter wave signal, such that when one millimeter wave transmitting antenna transmits the millimeter wave signal to the object, only the millimeter wave receiving antenna(s), which is/are associated with the millimeter wave transmitting antennas (e.g., which is arranged in a same sub-array unit as the millimeter wave transmitting antenna), will receive the reflected millimeter wave signals from the object simultaneously, thereby avoiding signal interference to most extent as possible.

Although several exemplary embodiments of the present disclosure have been shown and described, it would be appreciated by those skilled in the art that the embodiments shown and described above are only intended to illuminate implementations of the present disclosure, the scope of which is defined in the claims.

## Claims

1. A scene monitoring type millimeter wave scanning imaging system (10), comprising a plurality of millimeter wave scanning imaging devices (100) adapted to be positioned in a security inspection scene, such that the plurality of millimeter wave scanning imaging devices are arranged to be oriented towards different orientations respectively so as to scan and image objects (1) to be inspected located within different inspection areas of the security inspection scene with millimeter waves and to provide scan data for the objects,
wherein each of the plurality of millimeter wave scanning imaging devices is oriented towards a respective orientation different from the orientations towards which any others of the plurality of millimeter wave scanning imaging devices are oriented, and is configured to scan and image an object located within a respective inspection area different from the inspection areas of any others of the plurality of millimeter wave scanning imaging devices,
wherein the plurality of millimeter wave scanning imaging devices are arranged in a columnar arrangement having a plurality of side faces, each of which is defined by a corresponding one of the plurality of millimeter wave scanning imaging devices so as to face a corresponding one of the orientations in the security inspection scene.

2. The scene monitoring type millimeter wave scanning imaging system according to claim 1, wherein a cross section of the columnar arrangement has a closed polygonal shape having sides each defined by a corresponding one of the plurality of millimeter wave scanning imaging devices.

3. The scene monitoring type millimeter wave scanning imaging system according to claim 2, wherein the closed polygonal shape includes a triangular shape, a quadrilateral shape, a pentagonal shape or a hexagonal shape.

4. The scene monitoring type millimeter wave scanning imaging system according to claim 1, wherein two adjacent ones of the side faces of the columnar arrangement form an angle greater than zero degree and less than 180 degrees.

5. The scene monitoring type millimeter wave scanning imaging system according to any one of claims 1 to 4, further comprising:
an optical camera (109) configured to capture an optical image of an object to be inspected entering the security inspection scene, for determining whether or not the object to be inspected reaches one of the inspection areas towards which a corresponding one of the plurality of millimeter wave scanning imaging devices faces before the corresponding one of the millimeter wave scanning imaging devices is started-up for scanning imaging.

6. The scene monitoring type millimeter wave scanning imaging system according to claim 5, wherein
the scene monitoring type millimeter wave scanning imaging system comprises a plurality of said optical cameras, each of which is associated with a corresponding one of the plurality of millimeter wave scanning imaging devices so as to capture the optical image of the object to be inspected entering one of the inspection areas towards which the associated one of the millimeter wave scanning imaging devices faces.

7. The scene monitoring type millimeter wave scanning imaging system according to any one of claims 1 to 4, wherein
each of the plurality of millimeter wave scanning imaging devices comprises a millimeter wave transceiver antenna array, the millimeter wave transceiver antenna array including a mesh-shaped transceiver antenna array consisting of a plurality of sub-array units,
each of the plurality of sub-array units comprises a transmitting antenna linear array (111) and a receiving antenna linear array (112), the transmitting antenna linear array comprises a plurality of millimeter wave transmitting antennas (1111) arranged linearly, and the receiving antenna linear array comprises a plurality of millimeter wave receiving antennas(1121) arranged linearly.

8. The scene monitoring type millimeter wave scanning imaging system according to claim 7, wherein each of the plurality of sub-array units has a rectangular shape and comprises two said transmitting antenna linear arrays arranged respectively along a pair of sides of the rectangular shape facing each other and two said receiving antenna linear arrays arranged respectively along another pair of sides of the rectangular shape facing each other; and
two adjacent ones of the plurality of sub-array units share one said transmitting antenna linear array or one said receiving antenna linear array.

9. The scene monitoring type millimeter wave scanning imaging system according to claim 7, wherein each of the plurality of sub-array units comprises one said transmitting antenna linear array and one said receiving antenna linear array crossing each other to form a crisscross shape.

10. The scene monitoring type millimeter wave scanning imaging system according to claim 7, wherein at least one millimeter wave transceiver antenna array has a plane or arc profile.

11. The scene monitoring type millimeter wave scanning imaging system according to claim 7, wherein each of the plurality of millimeter wave scanning imaging devices further comprises a first millimeter wave source (101), a second millimeter wave source (102), a mixer (103), a switch matrix (104), a transmitter module (105) and a receiver module (106),
wherein,
the first millimeter wave source is configured as a transmitting source for generating a first millimeter wave signal;
the second millimeter wave source is configured as a reference source for generating a second millimeter wave signal;
the mixer is configured to mix in frequency the second millimeter wave signal generated by the second millimeter wave source with the first millimeter wave signal generated by the first millimeter wave source so as to form a frequency mixed signal as a reference signal;
the switch matrix is connected between the first millimeter wave source and the transmitter module, and is configured to control switching of on-off states of the millimeter wave transmitting antennas and the millimeter wave receiving antennas such that, in response to one millimeter wave transmitting antenna of the plurality millimeter wave transmitting antennas transmitting a millimeter wave signal to the objects to be inspected, only the millimeter wave receiving antennas which are arranged in a same one of the sub-array units as the one millimeter wave transmitting antenna receive reflected millimeter wave signals from the objects simultaneously;
the transmitter module is configured to, under control of the switch matrix, drive the millimeter wave transmitting antennas to transmit millimeter waves based on the first millimeter wave signal generated by the first millimeter wave source; and
the receiver module is configured to receive the reflected millimeter wave signals received by the millimeter wave receiving antennas from the objects, and to demodulate the received reflected millimeter wave signals based on the reference signal outputted from the mixer so as to obtain scan data for the objects.

12. The scene monitoring type millimeter wave scanning imaging system according to any one of claims 1-4, 6 and 8-11, further comprising:
a data processing device electrically connected in a wireless way or in a wired way with one or more of the plurality of millimeter wave scanning imaging devices so as to receive the scan data obtained by scanning the objects to be inspected with a millimeter wave by the one or more millimeter wave scanning imaging devices; and
a display device connected with the data processing device so as to receive the scan data and to display a millimeter wave image corresponding to the scan data.

13. A security inspection method, comprising scanning and imaging, by using the scene monitoring type millimeter wave scanning imaging system (10) as claimed in any of claims 1 to 12, objects to be inspected located within different inspection areas of a security inspection scene, with millimeter waves.

14. The method according to claim 13, wherein the scanning and imaging, by using the scene monitoring type millimeter wave scanning imaging system, objects to be inspected located within different inspection areas of a security inspection scene, with millimeter waves comprises:
determining whether an object to be inspected enters one of the inspection areas of the security inspection scene; and
after determining an object to be inspected has entered one of the inspection areas of the security inspection scene, scanning and imaging the object with millimeter waves by using a corresponding one of the plurality of millimeter wave scanning imaging devices facing towards the one of the inspection areas.

## Patentansprüche

1. Millimeterwellenabtast-Bildgebungssystem (10) des Szenenüberwachungstyps, das mehrere Millimeterwellenabtast-Bildgebungsvorrichtungen (100) umfasst, die dafür ausgelegt sind, in einer Sicherheitsprüfszene positioniert zu werden, so dass die mehreren Millimeterwellenabtast-Bildgebungsvorrichtungen so angeordnet sind, dass sie in Richtung jeweils verschiedener Orientierungen orientiert sind, um die zu prüfenden Objekte (1), die sich innerhalb verschiedener Prüfbereiche der Sicherheitsprüfszene befinden, mit Millimeterwellen abzutasten und abzubilden und Abtastdaten für die Objekte bereitzustellen,
wobei jede der mehreren Millimeterwellenabtast-Bildgebungsvorrichtungen in Richtung einer jeweiligen Orientierung orientiert ist, die von den Orientierungen verschieden ist, in deren Richtung irgendwelche anderen der mehreren Millimeterwellenabtast-Bildgebungsvorrichtungen orientiert sind, und konfiguriert ist, ein Objekt, das sich innerhalb eines jeweiligen Prüfbereichs befindet, der von den Prüfbereichen irgendwelcher anderer der mehreren Millimeterwellenabtast-Bildgebungsvorrichtungen verschieden ist, abzutasten und abzubilden,
wobei die mehreren Millimeterwellenabtast-Bildgebungsvorrichtungen in einer säulenförmigen Anordnung angeordnet sind, die mehrere Seitenflächen aufweist, wovon jede durch eine entsprechende der mehreren Millimeterwellenabtast-Bildgebungsvorrichtungen definiert ist, so dass sie einer entsprechenden der Orientierungen in der Sicherheitsprüfszene zugewandt ist.

2. Millimeterwellenabtast-Bildgebungssystem des Szenenüberwachungstyps nach Anspruch 1, wobei ein Querschnitt der säulenförmigen Anordnung eine geschlossene polygonale Form aufweist, die Seiten aufweist, wovon jede durch eine entsprechende der mehreren Millimeterwellenabtast-Bildgebungsvorrichtungen definiert ist.

3. Millimeterwellenabtast-Bildgebungssystem des Szenenüberwachungstyps nach Anspruch 2, wobei die geschlossene polygonale Form eine dreieckige Form, eine vierseitige Form, eine fünfeckige Form oder eine sechseckige Form enthält.

4. Millimeterwellenabtast-Bildgebungssystem des Szenenüberwachungstyps nach Anspruch 1, wobei zwei benachbarte der Seitenflächen der säulenförmigen Anordnung einen Winkel bilden, der größer als null Grad und kleiner als 180 Grad ist.

5. Millimeterwellenabtast-Bildgebungssystem des Szenenüberwachungstyps nach einem der Ansprüche 1 bis 4, das ferner Folgendes umfasst:
eine optische Kamera (109), die konfiguriert ist, ein optisches Bild eines zu prüfenden Objekts, das in die Sicherheitsprüfszene eintritt, aufzunehmen, um zu bestimmen, ob das zu prüfende Objekt einen der Prüfbereiche erreicht, in dessen Richtung eine entsprechende der mehreren Millimeterwellenabtast-Bildgebungsvorrichtungen orientiert ist, bevor die entsprechende der Millimeterwellenabtast-Bildgebungsvorrichtungen für die Abtastbildgebung gestartet wird.

6. Millimeterwellenabtast-Bildgebungssystem des Szenenüberwachungstyps nach Anspruch 5, wobei
das Millimeterwellenabtast-Bildgebungssystem des Szenenüberwachungstyps mehrere optische Kameras umfasst, wovon jede einer entsprechenden der mehreren Millimeterwellenabtast-Bildgebungsvorrichtungen zugeordnet ist, um ein optisches Bild des zu prüfenden Objekts aufzunehmen, das in einen der Prüfbereiche eintritt, in dessen Richtung die zugeordnete der Millimeterwellenabtast-Bildgebungsvorrichtungen orientiert ist.

7. Millimeterwellenabtast-Bildgebungssystem des Szenenüberwachungstyps nach einem der Ansprüche 1 bis 4, wobei
jede der mehreren Millimeterwellenabtast-Bildgebungsvorrichtungen eine Millimeterwellen-Sender/Empfänger-Antennenanordnung umfasst, wobei die Millimeterwellen-Sender/Empfänger-Antennenanordnung eine maschenförmige Sender/Empfänger-Antennenanordnung enthält, die mehrere Unteranordnungseinheiten umfasst,
wobei jede der mehreren Unteranordnungseinheiten eine lineare Sendeantennenanordnung (111) und eine lineare Empfangsantennenanordnung (112) umfasst, wobei die lineare Sendeantennenanordnung mehrere Millimeterwellen-Sendeantennen (1111) umfasst, die linear angeordnet sind, und die lineare Empfangsantennenanordnung mehrere Millimeterwellen-Empfangsantennen (1121) umfasst, die linear angeordnet sind.

8. Millimeterwellenabtast-Bildgebungssystem des Szenenüberwachungstyps nach Anspruch 7, wobei jede der mehreren Unteranordnungseinheiten eine rechteckige Form aufweist und zwei lineare Sendeantennenanordnungen, die jeweils entlang einem Paar von Seiten der rechteckigen Form, die einander zugewandt sind, angeordnet sind, und zwei lineare Empfangsantennenanordnungen, die jeweils entlang einem weiteren Paar von Seiten der rechteckigen Form, die einander zugewandt sind, angeordnet sind, umfasst; und
zwei benachbarte der mehreren Unteranordnungseinheiten eine lineare Sendeantennenanordnung oder eine lineare Empfangsantennenanordnung gemeinsam benutzen.

9. Millimeterwellenabtast-Bildgebungssystem des Szenenüberwachungstyps nach Anspruch 7, wobei jede der mehreren Unteranordnungseinheiten eine lineare Sendeantennenanordnung und eine lineare Empfangsantennenanordnung umfasst, die einander kreuzen, um eine gekreuzte Form zu bilden.

10. Millimeterwellenabtast-Bildgebungssystem des Szenenüberwachungstyps nach Anspruch 7, wobei wenigstens eine Millimeterwellen-Sender/Empfänger-Antennenanordnung ein ebenes oder ein gebogenes Profil aufweist.

11. Millimeterwellenabtast-Bildgebungssystem des Szenenüberwachungstyps nach Anspruch 7, wobei jede der mehreren Millimeterwellenabtast-Bildgebungsvorrichtungen ferner eine erste Millimeterwellenquelle (101), eine zweite Millimeterwellenquelle (102), einen Mischer (103), eine Schaltmatrix (104), ein Sendermodul (105) und ein Empfängermodul (106) umfasst,
wobei
die erste Millimeterwellenquelle als eine Sendequelle zum Erzeugen eines ersten Millimeterwellensignals konfiguriert ist;
die zweite Millimeterwellenquelle als eine Referenzquelle zum Erzeugen eines zweiten Millimeterwellensignals konfiguriert ist;
der Mischer konfiguriert ist, die Frequenz des durch die zweite Millimeterwellenquelle erzeugten zweiten Millimeterwellensignals mit der Frequenz des durch die erste Millimeterwellenquelle erzeugten ersten Millimeterwellensignals zu mischen, um ein frequenzgemischtes Signal als ein Referenzsignal zu bilden;
die Schaltmatrix zwischen die erste Millimeterwellenquelle und das Sendermodul geschaltet ist und konfiguriert ist, das Schalten der Ein/Aus-Zustände der Millimeterwellen-Sendeantennen und der Millimeterwellen-Empfangsantennen zu steuern, so dass in Reaktion auf eine Millimeterwellen-Sendeantenne der mehreren Millimeterwellen-Sendeantennen, die ein Millimeterwellensignal an die zu prüfenden Objekte sendet, nur die Millimeterwellen-Empfangsantennen, die in derselben der Unteranordnungseinheiten wie die eine Millimeterwellen-Sendeantenne angeordnet sind, die reflektierten Millimeterwellensignale von den Objekten gleichzeitig empfangen;
das Sendermodul konfiguriert ist, gemäß der Steuerung der Schaltmatrix die Millimeterwellen-Sendeantennen anzusteuern, um Millimeterwellen basierend auf dem durch die erste Millimeterwellenquelle erzeugten ersten Millimeterwellensignal zu senden; und
das Empfängermodul konfiguriert ist, die durch die Millimeterwellen-Empfangsantennen empfangenen reflektierten Millimeterwellensignale von den Objekten zu empfangen und die empfangenen reflektierten Millimeterwellensignale basierend auf dem von dem Mischer ausgegebenen Referenzsignal zu demodulieren, um die Abtastdaten für die Objekte zu erhalten.

12. Millimeterwellenabtast-Bildgebungssystem des Szenenüberwachungstyps nach einem der Ansprüche 1-4, 6 und 8-11, das ferner Folgendes umfasst:
eine Datenverarbeitungsvorrichtung, die in einer drahtlosen Weise oder in einer drahtgebundenen Weise mit einer oder mehreren der mehreren Millimeterwellenabtast-Bildgebungsvorrichtungen elektrisch verbunden ist, um die durch das Abtasten der zu prüfenden Objekte mit einer Millimeterwelle durch die eine oder die mehreren Millimeterwellenabtast-Bildgebungsvorrichtungen erhaltenen Abtastdaten zu empfangen; und
eine Anzeigevorrichtung, die mit der Datenverarbeitungsvorrichtung verbunden ist, um die Abtastdaten zu empfangen und ein Millimeterwellenbild entsprechend den Abtastdaten anzuzeigen.

13. Sicherheitsprüfverfahren, das das Abtasten und Abbilden unter Verwendung des Millimeterwellenabtast-Bildgebungssystems (10) des Szenenüberwachungstyps nach einem der Ansprüche 1 bis 12 von zu prüfenden Objekten, die sich innerhalb verschiedener Prüfbereiche einer Sicherheitsprüfszene befinden, mit Millimeterwellen umfasst.

14. Verfahren nach Anspruch 13, wobei das Abtasten und Abbilden unter Verwendung des Millimeterwellenabtast-Bildgebungssystems des Szenenüberwachungstyps von zu prüfenden Objekten, die sich innerhalb verschiedener Prüfbereiche einer Sicherheitsprüfszene befinden, mit Millimeterwellen Folgendes umfasst:
Bestimmen, ob ein zu prüfendes Objekt in einen der Prüfbereiche der Sicherheitsprüfszene eintritt; und
nach dem Bestimmen, dass ein zu prüfendes Objekt in einen der Prüfbereiche der Sicherheitsprüfszene eingetreten ist, Abtasten und Abbilden des Objekts mit Millimeterwellen unter Verwendung einer entsprechenden der mehreren Millimeterwellenabtast-Bildgebungsvorrichtungen, die in Richtung des einen der Prüfbereiche orientiert ist.

## Revendications

1. Système (10) d'imagerie par balayage en ondes millimétriques du type pour la surveillance d'une scène, comprenant une pluralité de dispositifs (100) d'imagerie par balayage en ondes millimétriques adaptés à être positionnés dans une scène d'inspection de sécurité, de sorte que la pluralité de dispositifs d'imagerie par balayage en ondes millimétriques soient agencés pour être respectivement orientés vers des orientations différentes de manière à balayer et imager des objets (1) à inspecter situés au sein de zones d'inspection différentes de la scène d'inspection de sécurité avec des ondes millimétriques et à fournir des données de balayage pour les objets,
chacun de la pluralité de dispositifs d'imagerie par balayage en ondes millimétriques étant orienté vers une orientation respective différente des orientations vers lesquelles d'autres quelconques de la pluralité de dispositifs d'imagerie par balayage en ondes millimétriques sont orientés, et étant configuré pour balayer et imager un objet situé au sein d'une zone d'inspection respective différente des zones d'inspection d'autres quelconques de la pluralité de dispositifs d'imagerie par balayage en ondes millimétriques,
la pluralité de dispositifs d'imagerie par balayage en ondes millimétriques étant agencés selon un agencement en colonnes présentant une pluralité de faces latérales, chacune desquelles est définie par un dispositif correspondant de la pluralité de dispositifs d'imagerie par balayage en ondes millimétriques de manière à être tournée vers une orientation correspondante des orientations dans la scène d'inspection de sécurité.

2. Système d'imagerie par balayage en ondes millimétriques du type pour la surveillance d'une scène selon la revendication 1, dans lequel une coupe transversale de l'agencement en colonnes présente une forme polygonale fermée présentant des côtés définis chacun par un dispositif correspondant de la pluralité de dispositifs d'imagerie par balayage en ondes millimétriques.

3. Système d'imagerie par balayage en ondes millimétriques du type pour la surveillance d'une scène selon la revendication 2, dans lequel la forme polygonale fermée comporte une forme triangulaire, une forme quadrilatérale, une forme pentagonale ou une forme hexagonale.

4. Système d'imagerie par balayage en ondes millimétriques du type pour la surveillance d'une scène selon la revendication 1, dans lequel deux faces latérales adjacentes des faces latérales de l'agencement en colonnes forment un angle supérieur à zéro degré et inférieur à 180 degrés.

5. Système d'imagerie par balayage en ondes millimétriques du type pour la surveillance d'une scène selon l'une quelconque des revendications 1 à 4, comprenant en outre :
une caméra optique (109) configurée pour capturer une image optique d'un objet à inspecter pénétrant dans la scène d'inspection de sécurité aux fins de déterminer si l'objet à inspecter atteint ou non l'une des zones d'inspection vers laquelle un dispositif correspondant de la pluralité de dispositifs d'imagerie par balayage en ondes millimétriques est tourné avant la mise en marche du dispositif correspondant des dispositifs d'imagerie par balayage en ondes millimétriques pour l'imagerie par balayage.

6. Système d'imagerie par balayage en ondes millimétriques du type pour la surveillance d'une scène selon la revendication 5,
lequel système d'imagerie par balayage en ondes millimétriques du type pour la surveillance d'une scène comprend une pluralité de dites caméras optiques, chacune desquelles est associée à un dispositif correspondant de la pluralité de dispositifs d'imagerie par balayage en ondes millimétriques de manière à capturer l'image optique de l'objet à inspecter pénétrant dans l'une des zones d'inspection vers laquelle le dispositif associé des dispositifs d'imagerie par balayage en ondes millimétriques est tourné.

7. Système d'imagerie par balayage en ondes millimétriques du type pour la surveillance d'une scène selon l'une quelconque des revendications 1 à 4, dans lequel
chacun de la pluralité de dispositifs d'imagerie par balayage en ondes millimétriques comprend un réseau d'antennes émetteur-récepteur d'ondes millimétriques, le réseau d'antennes émetteur-récepteur d'ondes millimétriques comportant un réseau d'antennes émetteur-récepteur en forme de maille constitué d'une pluralité d'unités de sous-réseau,
chacune de la pluralité d'unités de sous-réseau comprend un réseau linéaire d'antennes émettrices (111) et un réseau linéaire d'antennes réceptrices (112), le réseau linéaire d'antennes émettrices comprend une pluralité d'antennes émettrices d'ondes millimétriques (1111) agencées linéairement et le réseau linéaire d'antennes réceptrices comprend une pluralité d'antennes réceptrices d'ondes millimétriques (1121) agencées linéairement.

8. Système d'imagerie par balayage en ondes millimétriques du type pour la surveillance d'une scène selon la revendication 7, dans lequel chacune de la pluralité d'unités de sous-réseau présente une forme rectangulaire et comprend deux dits réseaux linéaires d'antennes émettrices agencés respectivement le long d'une paire de côtés de la forme rectangulaire tournés l'un vers l'autre et deux dits réseaux linéaires d'antennes réceptrices agencés respectivement le long d'une autre paire de côtés de la forme rectangulaire tournés l'un vers l'autre ; et
deux unités de sous-réseau adjacentes de la pluralité d'unités de sous-réseau partagent un dit réseau linéaire d'antennes émettrices ou un dit réseau linéaire d'antennes réceptrices.

9. Système d'imagerie par balayage en ondes millimétriques du type pour la surveillance d'une scène selon la revendication 7, dans lequel chacune de la pluralité d'unités de sous-réseau comprend un dit réseau linéaire d'antennes émettrices et un dit réseau linéaire d'antennes réceptrices se croisant entre eux pour former une forme entrecroisée.

10. Système d'imagerie par balayage en ondes millimétriques du type pour la surveillance d'une scène selon la revendication 7, dans lequel au moins un réseau d'antennes émetteur-récepteur d'ondes millimétriques possède un profil plan ou en arc.

11. Système d'imagerie par balayage en ondes millimétriques du type pour la surveillance d'une scène selon la revendication 7, dans lequel chacun de la pluralité de dispositifs d'imagerie par balayage en ondes millimétriques comprend en outre une première source d'ondes millimétriques (101), une deuxième source d'ondes millimétriques (102), un mélangeur (103), une matrice de commutation (104), un module émetteur (105) et un module récepteur (106),
la première source d'ondes millimétriques étant configurée comme une source émettrice pour générer un premier signal en onde millimétrique ;
la deuxième source d'ondes millimétriques étant configurée comme une source de référence pour générer un deuxième signal en onde millimétrique ;
le mélangeur étant configuré pour mélanger en fréquence le deuxième signal en onde millimétrique généré par la deuxième source d'ondes millimétriques au premier signal en onde millimétrique généré par la première source d'ondes millimétriques de manière à former un signal mélangé en fréquence constituant un signal de référence ;
la matrice de commutation étant connectée entre la première source d'ondes millimétriques et le module émetteur et étant configurée pour commander la commutation d'états marche-arrêt des antennes émettrices d'ondes millimétriques et des antennes réceptrices d'ondes millimétriques de sorte que, en réponse à l'émission, par une antenne émettrice d'ondes millimétriques donnée de la pluralité d'antennes émettrices d'ondes millimétriques, d'un signal en onde millimétrique vers des objets à inspecter, seules les antennes réceptrices d'ondes millimétriques qui sont agencées dans une même des unités de sous-réseau constituant l'antenne émettrice d'ondes millimétriques donnée reçoivent simultanément des signaux en onde millimétrique réfléchis depuis les objets ;
le module émetteur étant configuré pour, sous la commande de la matrice de commutation, amener les antennes émettrices d'ondes millimétriques à émettre des ondes millimétriques sur la base du premier signal en onde millimétrique généré par la première source d'ondes millimétriques ; et
le module récepteur étant configuré pour recevoir les signaux en onde millimétrique réfléchis reçus par les antennes réceptrices d'ondes millimétriques depuis les objets et pour démoduler les signaux en onde millimétrique réfléchis reçus sur la base du signal de référence fourni en sortie par le mélangeur de manière à obtenir des données de balayage pour les objets.

12. Système d'imagerie par balayage en ondes millimétriques du type pour la surveillance d'une scène selon l'une quelconque des revendications 1 à 4, 6 et 8 à 11, comprenant en outre :
un dispositif de traitement de données connecté électriquement sans fil ou de manière filaire à un ou plusieurs de la pluralité de dispositifs d'imagerie par balayage en ondes millimétriques de manière à recevoir les données de balayage obtenues par balayage des objets à inspecter avec une onde millimétrique par les un ou plusieurs dispositifs d'imagerie par balayage en ondes millimétriques ; et
un dispositif d'affichage connecté au dispositif de traitement de données de manière à recevoir les données de balayage et à afficher une image en ondes millimétriques correspondant aux données de balayage.

13. Procédé d'inspection de sécurité, comprenant le balayage et l'imagerie, au moyen du système (10) d'imagerie par balayage en ondes millimétriques du type pour la surveillance d'une scène tel que revendiqué dans l'une quelconque des revendications 1 à 12, d'objets à inspecter situés au sein de zones d'inspection différentes d'une scène d'inspection de sécurité, avec des ondes millimétriques.

14. Procédé selon la revendication 13, dans lequel le balayage et l'imagerie, au moyen du système d'imagerie par balayage en ondes millimétriques du type pour la surveillance d'une scène, d'objets à inspecter situés au sein de zones d'inspection différentes d'une scène d'inspection de sécurité, avec des ondes millimétriques comprend :
la détermination si un objet à inspecter pénètre ou non dans l'une des zones d'inspection de la scène d'inspection de sécurité ; et
suite à la détermination qu'un objet à inspecter a pénétré dans l'une des zones d'inspection de la scène d'inspection de sécurité, le balayage et l'imagerie de l'objet avec des ondes millimétriques au moyen d'un dispositif correspondant de la pluralité de dispositifs d'imagerie par balayage en ondes millimétriques tourné vers ladite une des zones d'inspection.
